# EUROPEAN PATENT APPLICATION

(11) **EP 4 206 140 A1**
(43) Date of publication of application: **05.07.2023**
(21) Application number: 21859831.6
(22) Date of filing: 24.06.2021
(51) Int. Cl.: C01G 45/12, H01M 4/505, H01M 10/36

(54) **CATHODE MATERIAL, PREPARATION METHOD THEREFOR, AND APPLICATION THEREOF**

(30) Priority: 28.08.2020 CN 202010890030
(71) Applicant: Rehab (Changzhou) Energy Technology Co., Ltd., Changzhou City, Jiangsu 213031 (CN)
(72) Inventor: FU, Yang, Changzhou City, Jiangsu 213031 (CN); LUO, Yunfeng, Changzhou City, Jiangsu 213031 (CN); CHEN, Pu, Changzhou City, Jiangsu 213031 (CN)
(74) Representative: DREISS Patentanwälte PartG mbB
(86) International application number: PCT/CN2021/102125
(87) International publication number: WO 2022/041989

(57) **Abstract**

Disclosed are a positive electrode material, a preparation method therefor, and an application thereof. The method includes: (1) performing a co-precipitation reaction by mixing a soluble manganese salt and a soluble metal M salt with carbonate, to obtain a co-precipitate containing MₓMn₁₋ₓCO₃; and (2) sintering the co-precipitate containing MₓMn₁₋ₓCO₃ in an air atmosphere to obtain the positive electrode material containing MₓMn₁₋ₓO₂, where M is at least one selected from Al, Zr, Ti, Ni, Co, Mg, Ta, Ca, Fe, Na, K, Cu, Zn, Nb, Sn, Sb, La and In, and where x is in a range from 0 to 1 excluding endpoints 0 and 1.

## Description

### PRIORITY INFORMATION

The present disclosure claims priority to Chinese Patent Application No. 202010890030. X, entitled "POSITIVE ELECTRODE MATERIAL AND PREPARATION METHOD THEREFOR AND APPLICATION THEREOF", filed on August 28, 2020 to the China National Intellectual Property Administration, and the entire contents of which are incorporated herein by reference.

### FIELD

The present disclosure relates to the field of energy materials, and particularly, relates to a positive electrode material, a preparation method therefor, and an application thereof.

### BACKGROUND

Among the reported positive electrode materials for aqueous zinc ion batteries, manganese dioxide undoped with metal ions is mostly adopted as the positive electrode material for aqueous zinc ion batteries. However, the existing aqueous zinc ion batteries has relatively low initial capacity per gram and poor cycle performance due to the use of the MnO₂ positive electrode without doped metal ions. In addition, Mn with +4 valence in the MnO₂ positive electrode material is easily reduced to Mn with +2 valence, which allows the positive electrode material to be dissolved in electrolyte, thereby resulting in a deterioration of its cycle performance.

### SUMMARY

The present disclosure is to solve at least one of the technical problems in the related art to some extent. To this end, an object of the present disclosure is to provide a positive electrode material, a preparation method therefor, and an application thereof. The positive electrode material obtained by the method according to the present disclosure is structurally stable during charging and discharging, thereby improving the cycle performance of an aqueous zinc ion battery.

In one aspect of the present disclosure, the present disclosure provides a method for preparing a positive electrode material. According to an embodiment of the present disclosure, the method includes: (1) performing a co-precipitation reaction by mixing a soluble manganese salt and a soluble metal M salt with carbonate, to obtain a co-precipitate containing MₓMn₁₋ₓCO₃; and (2) sintering the co-precipitate containing MₓMn₁₋ₓCO₃ in an air atmosphere to obtain the positive electrode material containing MₓMn₁₋ₓO₂, where M is at least one selected from Al, Zr, Ti, Ni, Co, Mg, Ta, Ca, Fe, Na, K, Cu, Zn, Nb, Sn, Sb, La and In, and where x is in a range from 0 to 1 excluding endpoints 0 and 1.

In the method for preparing the positive electrode material according to the embodiment of the present disclosure, the soluble manganese salt and the soluble metal M salt are mixed with carbonate to perform the co-precipitation reaction; Mn²⁺ ions and M metal ions simultaneously generate a precipitate; and then the obtained co-precipitate containing MₓMn₁₋ₓCO₃ is sintered in the air atmosphere, and the positive electrode material containing MₓMn₁₋ₓO₂. That is, the MnO₂ positive electrode material of the present disclosure is doped with other metal elements, and a more stable material structure is formed through the interaction between ions. In this way, the structure of the positive electrode material is more stable during charging and discharging, and thus the cycle performance of a cell is improved. In the meantime, the positive electrode material has good electrochemical performance and specific capacity, which are attributed to the doping of other metal elements. In addition, the preparation process of the method is simple and can prepare the positive electrode material by simply synthesizing the co-precipitate containing MₓMn₁₋ₓCO₃ through the co-precipitation and then adjusting the heat treatment process, and it requires low-cost raw materials. Thus, the method can be used in massive industrial production. The positive electrode material can be used in aqueous zinc ion batteries to solve the problem of poor cycle performance of the aqueous zinc ion batteries.

In addition, the method for preparing the positive electrode material according to the above-mentioned embodiment of the present disclosure may further have the following additional technical features.

In some embodiments of the present disclosure, in step (1), the soluble manganese salt is at least one selected from manganese sulfate, manganese nitrate, manganese acetate, and manganese chloride.

In some embodiments of the present disclosure, in step (1), the soluble metal M salt is at least one of M sulfate, M nitrate, M acetate, M oxalate, and M chloride.

In some embodiments of the present disclosure in step (1), a total molar concentration of the soluble manganese salt and a total molar concentration of the soluble M salt ranges from 0.001 mol/L to 10 mol/L.

In some embodiments of the present disclosure, in step (1), a molar concentration of the carbonate ranges from 0.001 mol/L to 10 mol/L.

In some embodiments of the present disclosure, in step (2), the sintering is performed at a temperature from 150°C to 700°C.

In some embodiments of the present disclosure, in step (2), the sintering is performed at a temperature 320°C to 470°C.

In some embodiments of the present disclosure, in step (2), a duration of said sintering ranges from 0.1 hour to 20 hours.

In some embodiments of the present disclosure, in step (2), a duration of said sintering ranges from 2 hours to 8 hours.

In some embodiments of the present disclosure, the co-precipitate containing MₓMn₁₋ₓCO₃ is washed and dried prior to said sintering the co-precipitate containing MₓMn₁₋ₓCO₃ in the air atmosphere.

In another aspect of the present disclosure, the present disclosure provides a positive electrode material. According to an embodiment of the present disclosure, the positive electrode material is prepared by the method described above. Thus, the positive electrode material has excellent cycle performance and specific capacity.

In a third aspect of the present disclosure, the present disclosure provides a positive electrode plate. According to an embodiment of the present disclosure, the positive electrode plate is prepared using the positive electrode material obtained by the method described above or the positive electrode material described above. Thus, the positive electrode plate has excellent cycle performance and specific capacity.

In a fourth aspect of the present disclosure, the present disclosure provides an aqueous zinc ion battery. According to an embodiment of the present disclosure, the aqueous zinc ion battery includes the positive electrode plate described above. Thus, the aqueous zinc ion battery has excellent cycle performance and specific capacity.

Additional aspects and advantages of the present disclosure will be set forth in part in the description which follows and, in part, will be obvious from the description, or may be learned by practice of the present disclosure.

### BRIEF DESCRIPTION OF THE DRAWINGS

The foregoing and/or additional aspects and advantages of the present disclosure will become apparent and readily appreciated from the following description of the embodiments, taken in conjunction with the accompanying drawings of which:
FIG. 1 is a schematic flow diagram of a method for preparing a positive electrode material according to an embodiment of the present disclosure;
FIG. 2 is a XRD spectrum of a positive electrode material obtained in Example 1 and MnO₂ obtained in Comparative Example; and
FIG. 3 is a cycle curve of aqueous zinc ion batteries obtained in Example 1 and Comparative Example.

### DETAILED DESCRIPTION

The embodiments of the present disclosure are described in detail below, and they are intended to illustrate, rather than limiting, the present disclosure.

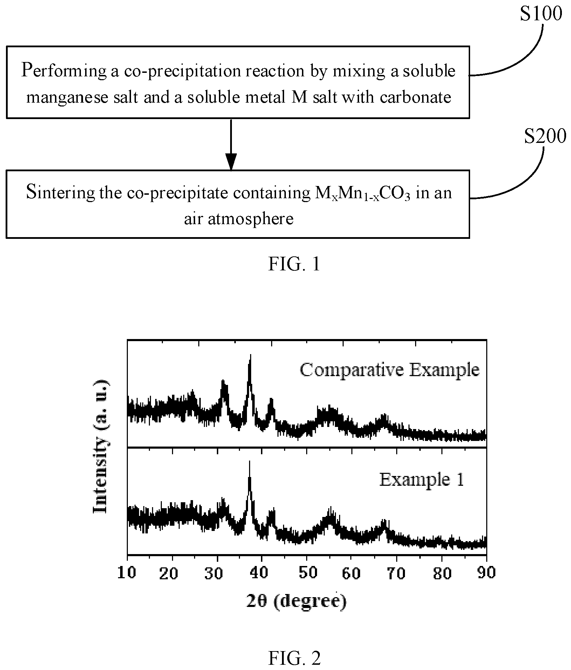

In one aspect of the present disclosure, the present disclosure provides a method for preparing a positive electrode material. According to an embodiment of the present disclosure, referring to Figure 1, the method includes a step S100: performing a co-precipitation reaction by mixing a soluble manganese salt and a soluble metal M salt with carbonate.

In this step, with stirring, the soluble manganese salt and the soluble metal M salt are mixed with carbonate, and Mn²⁺ ions and M metal ions simultaneously react with the carbonate to form a precipitate, to obtain a co-precipitate containing MₓMn₁₋ₓCO₃, where M is at least one selected from Al, Zr, Ti, Ni, Co, Mg, Ta, Ca, Fe, Na, K, Cu, Zn, Nb, Sn, Sb, La and In, and where x is any value in a range from 0 to 1 excluding endpoints 0 and 1. The applicant found that, Mn²⁺ ions and M metal ions simultaneously generate a precipitate through the co-precipitation reaction performed by mixing the soluble manganese salt and the soluble metal M salt with the carbonate, allowing a more stable material structure to be formed through the interaction between ions. In this way, the structure of the positive electrode material is more stable during charging and discharging, and thus the cycle performance of the cell is improved. In the meantime, the positive electrode material has good electrochemical performance and specific capacity, which are attributed to the doping of other metal elements.

Further, the above-mentioned soluble manganese salt is at least one selected from manganese sulfate, manganese nitrate, manganese acetate and manganese chloride. The soluble metal M salt is at least one of M sulfate, M nitrate, M acetate, M oxalate, and M. The molar concentration of the carbonate ranges from 0.001 to 10 mol/L, for example 5 mol/L. The carbonate may be sodium carbonate, potassium carbonate, or sodium carbonate. Meanwhile, a total molar concentrations of the soluble manganese salt and the soluble M salt ranges from 0.001 to 10 mol/L, for example, 5 mol/L. The applicant found that, agglomeration may occur when the total molar concentration of the soluble manganese salt and the soluble M salt is excessively high, thereby resulting in poor dispersibility of the prepared material, whereas the yield may be reduced when the total molar concentration of the soluble manganese salt and the soluble M salt is excessively low, which is not favorable for large-scale production. In addition, in the present disclosure, the soluble manganese salt and the soluble M salt are mixed in a molar ratio of Mn element to M element of (1-x): x. That is, the present disclosure defines that the molar sum of the manganese ions and the M ions is 1, based on the principle that the M ion takes the position of the manganese ion in a unit cell, thereby forming a stable structure and controlling an actual doping amount thereof. If the ratio is greater than 1 or smaller than 1, the ion doping amount will be uncontrollable in the synthesized material and deviates from the calculated value, thereby affecting the consistency of the material.

The method further includes a step S200: sintering the co-precipitate containing MₓMn₁₋ₓCO₃ in an air atmosphere.

In this step, the obtained co-precipitate containing MₓMn₁₋ₓCO₃ is sintered in the air atmosphere, to decompose the carbonate precipitate, thereby obtaining a positive electrode material containing MₓMn₁₋ₓO₂. According to a specific embodiment of the present disclosure, the sintering is performed at a temperature between 150°C and 700°C. The applicant found that, if the sintering temperature is excessively low, a phase transition temperature of the material cannot be reached, and thus the material can hardly change from a MnCO₃ phase to a MnO₂ phase; and if the sintering temperature is excessively high, the MnO₂ phase can easily change to a Mn₃O₄ or Mn₂O₃ phase. Thereby, by performing the sintering at the temperature as defined in the present disclosure, it is ensured that the MnCO₃ phase can change to the MnO₂ phase. According to yet another specific embodiment of the present disclosure, the sintering is performed at a temperature from 320°C to 470°C. According to yet another specific embodiment of the present disclosure, a duration of the sintering ranges from 0.1 to 20 h. The applicant found that, a degree of crystallinity of the material may be excessively low when a duration of the sintering is excessively short, thereby resulting in poor cycle performance of the material; and the degree of crystallinity of the material may be excessively high when the duration of the sintering is excessively long, thereby inhibiting the development of capacity per gram. According to still another specific embodiment of the present disclosure, the duration of the sintering ranges from 2 to 8 h.

Specifically, after the obtained co-precipitate containing MₓMn₁₋ₓCO₃ is sintered in the air atmosphere, the obtained co-precipitate containing MₓMn₁₋ₓCO₃ is washed and dried in advance. It should be noted that those skilled in the art can select the washing manner and drying conditions according to actual needs, which are not described in detail herein.

In the method for preparing the positive electrode material according to the embodiments of the present disclosure, the soluble manganese salt and the soluble metal M salt are mixed with the carbonate to perform the co-precipitation reaction, Mn²⁺ ions and M metal ions simultaneously generate a precipitate, and then the obtained co-precipitate containing MₓMn₁₋ₓCO₃ is sintered in the air atmosphere. That is, the positive electrode material containing MₓMn₁₋ₓO₂, i.e., the MnO₂ positive electrode material of the present disclosure, is doped with other metal elements, and a more stable material structure is formed through the interaction between ions. In this way, the structure of the positive electrode material is more stable during charging and discharging, and thus the cycle performance of a cell is improved. In the meantime, the positive electrode material has good electrochemical performance and specific capacity, which are attributed to the doping of other metal elements. In addition, the preparation process of the method is simple and can prepare the positive electrode material by simply synthesizing the co-precipitate containing MₓMn₁₋ₓCO₃ through the co-precipitation and then adjusting the heat treatment process, and it requires low-cost raw materials. Thus, the method can be used in massive industrial production. The positive electrode material can be used in aqueous zinc ion batteries to solve the problem of poor cycle performance of the aqueous zinc ion batteries.

In yet another aspect of the present disclosure, the present disclosure provides a positive electrode material. According to an embodiment of the present disclosure, the positive electrode material is prepared by the method described above. Thus, the positive electrode material, which is prepared by using the above-mentioned co-precipitation and heat treatment process, has excellent cycle performance and specific capacity. It should be noted that the features and advantages described above with respect to the method for preparing the positive electrode material are equally applicable to the positive electrode material and will not be described in detail herein.

In a third aspect of the present disclosure, the present disclosure provides a positive electrode plate. According to an embodiment of the present disclosure, the positive electrode plate is prepared using the positive electrode material obtained by the method described above or using the positive electrode material described above. Specifically, the above-mentioned positive electrode material, after being ground, is mixed with a conductive agent and a binder to prepare a positive electrode slurry, and the slurry is applied on a conductive film and then dried to obtain a positive electrode plate. Thus, the positive electrode plate has excellent cycle performance and specific capacity. It should be noted that the conductive agent, binder, and conductive film used in the preparation of the positive electrode plate are the conventional raw materials in the related art. The features and advantages of the positive electrode material and the preparation method thereof, as described above, are also applicable to the positive electrode plate, and they will not be described in detail herein.

In a fourth aspect of the present disclosure, the present disclosure provides an aqueous zinc ion battery. According to an embodiment of the present disclosure, the aqueous zinc ion battery includes the positive electrode plate described above. Thus, the aqueous zinc ion battery has excellent cycle performance and specific capacity. It should be noted that the features and advantages described above with respect to the positive electrode plate are equally applicable to the positive electrode material and will not be described in detail herein.

The embodiments of the present disclosure are described in detail below. It should be understood that the embodiments described below are illustrative only and shall not construed as limiting the present disclosure. Additionally, all reagents employed in the following examples are either commercially available or can be synthesized according to the known methods or the method described herein, unless they are explicitly indicated, and the unspecified reaction condition are readily available to those skilled in the art.

### Example 1

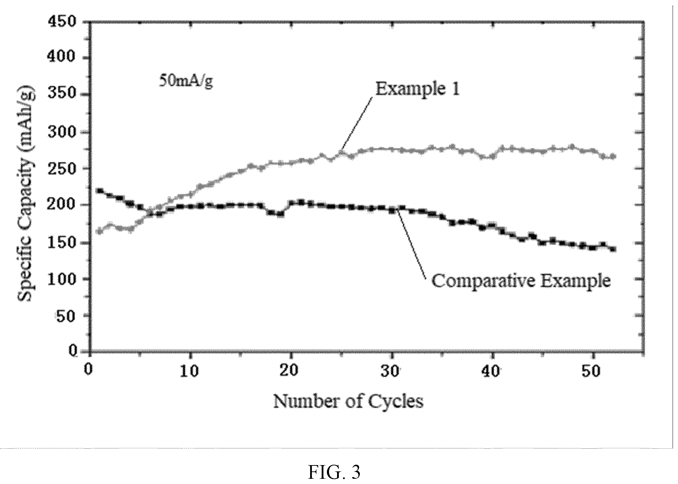

(1) Al₂(SO₄)₃ and MnSO₄, as row material, reacted according to n(Al): N(Mn) = 0.03: 0.97 to prepare a mixed solution A. A concentration of the mixed solution was 0.5 mol/L, and a total volume thereof was 500 ml. A solution B was prepared by using Na₂CO₃ as a raw material. A concentration the solution B was 0.5 mol/L, and a total volume thereof was 500 ml.
(2) The solution A and the solution B were simultaneously added to a beaker (2 L) at an equal rate and magnetically stirred for 2 h, followed by washing 3 times with distilled water and drying at 70°C to obtain a co-precipitated powder containing Al_{0.03}Mn_{0.97}CO₃.
(3) The co-precipitated powder containing Al_{0.03}Mn_{0.97}CO₃ was placed into a box-type furnace for heat treatment, a sintering temperature was 410°C, and a duration of the sintering was 4 h, to obtain a positive electrode material containing Al_{0.03}Mn_{0.97}O₂.
(4) After the above-mentioned positive electrode material containing Al_{0.03}Mn_{0.97}O₂ was cooled to room temperature, the material was taken out, ground with an agate mortar, and then subjected to XRD detection. The XRD test result thereof is shown in FIG. 2. The material was ε-MnO₂ pure phase, proving that the doped ions enter the unit cell of the material and do not exist in the form of a heterogeneous phase. At the same time, EDS detection indicates that the material contains Al and Mn elements;
(5) Preparation of a positive electrode plate of a battery: the positive electrode material, acetylene black and PVDF were homogenized in a mass ratio of 7:2:1; then the uniformly stirred positive electrode slurry was uniformly applied onto the conductive PE film; and the coated PE film was placed into an oven for vacuum drying, with a drying temperature of 60°C and a drying duration of 10 h, to obtain a positive electrode plate.
(6) Battery assembling: (positive electrode: the positive electrode plate obtained in step (5); negative electrode: a zinc foil or a zinc powder negative electrode prepared by slurry drawing using a copper mesh current collector; separator: AGM separator; electrolyte: zinc sulfate solution with a concentration of 1.8 mol/L). After the AGM separator was fully soaked in a liquid electrolyte (the 1.8 mol/L zinc sulphate aqueous solution), the positive electrode plate and the negative electrode Zn foil were assembled with the AGM separator, to obtain an aqueous zinc ion battery;
(7) Battery test: referring to FIG. 3, the assembled aqueous zinc ion battery had a maximum specific capacity of 278 mAh/g at a current density of 50 mA/g in a 25°C environment, and had a capacity retention of 95% after 50 cycles.

### Example 2

Example 2 is the same as Example 1, except that the positive electrode material (Ti_{0.03}Mn_{0.97}O₂) was obtained by doping 3% Ti element, and the material is a MnOz pure phase according to XRD detection. Example 2 substantiates that the doped ions enter the unit cell of the material, rather than existing in the form of a heterogeneous phase. Meanwhile, EDS detection indicates that the material contains Ti and Mn elements.

Battery test: the maximum specific capacity of the assembled aqueous zinc ion battery was 223 mAh/g at a current density of 50 mA/g at 25°C, and the capacity retention was 86% after 50 cycles.

### Example 3

Example 3 is the same as Example 1, except that the positive electrode material (Mg_{0.03}Mn_{0.97}O₂) was obtained by doping 3% Mg element, and the material is a MnOz pure phase according to XRD detection. Example 3 substantiates that the doped ions enter the unit cell of the material, rather than existing in the form of a heterogeneous phase. Meanwhile, EDS detection indicates that the material contains Mg and Mn elements.

Battery test: the maximum specific capacity of the assembled aqueous zinc ion battery was 228 mAh/g at a current density of 50 mA/g at 25°C, and the capacity retention was 83% after 50 cycles.

### Example 4

Example 4 is the same as Example 1, except that the positive electrode material (Al_{0.03}Zr_{0.01}Mn_{0.96}O₂) is obtained by doping 1% Zr element in addition to doping 3% Al element, and the material is a MnOz pure phase according to XRD detection. Example 4 substantiates that the doped ions enter the unit cell of the material, rather than existing in the form of a heterogeneous phase. Meanwhile, EDS detection indicates that the material contains Al, Zr and Mn elements.

Battery test: the maximum specific capacity of the assembled aqueous zinc ion battery was 253 mAh/g at a current density of 50 mA/g at 25°C, and the capacity retention was 96.5% after 50 cycles.

### Example 5

Example 5 is basically the same as Example 1. Example 5 differs from Example 1 in that the mixed solution A with a concentration of 0.8 mol/L and a total volume of 300 ml was prepared by reacting Al(NO₃)₃ and Mn(NO₃)₂ in accordance with n(Al): N(Mn) = 0.05: 0.95 and the solution B with a concentration of 0.8 mol/L and a total volume of 300 ml was prepared by using Na₂CO₃ as a raw material. After the experimental synthesis, the finally obtained material was a MnO₂ pure phase, which was detected by XRD. Example 5 substantiates that the doped ions enter the unit cell of the material, rather than existing in the form of a heterogeneous phase. At the same time, the EDS detection indicates that the material contains Al and Mn elements.

Battery test: the maximum specific capacity of the assembled aqueous zinc ion battery was 228 mAh/g at a current density of 50 mA/g at 25°C, and the capacity retention was 93% after 50 cycles.

### Example 6

Example 6 is basically the same as Example 1. Example 6 differs from Example 1 in that the mixed solution A with a concentration of 0.3 mol/L and a total volume of 800 ml was prepared by reacting starting materials AlCl₃ and MnCh in accordance with n(Al): N(Mn) = 0.05: 0.95 and a solution B with a concentration of 0.3 mol/L and a total volume of 800 ml was prepared by using Na₂CO₃ as a raw material. After the experimental synthesis, the finally obtained material was a MnO₂ pure phase, which was detected by XRD. Example 6 substantiates that the doped ions enter the unit cell of the material, rather than existing in the form of a heterogeneous phase. At the same time, the EDS detection indicates that the material contains Al and Mn elements.

Battery test: the maximum specific capacity of the assembled aqueous zinc ion battery was 226 mAh/g at a current density of 50 mA/g at 25°C, and the capacity retention was 89% after 50 cycles.

### Comparative Example

MnCO₃ material was synthesized without doping any other metal elements, and the MnCO₃ material was subj ected to a heat treatment to obtain MnO₂ material. The XRD test result thereof is shown in FIG. 2. The XRD spectrum thereof is the same as the XRD spectrum of Al_{0.03}Mn_{0.97}O₂ formed by doping Al in Example 1, indicating that the crystal structure of the material doped with metal ions in Example 1 is the same phase as that of the material synthesized without doping other metal ions in Comparative Example 1. Thus, it can be verified that no other heterogeneous phase is formed in Example 1. A battery plate was prepared and an aqueous zinc ion battery assembled according to the procedures as described in Example 1.

Battery test: referring to FIG. 3, the assembled aqueous zinc ion battery had a maximum specific capacity of 219 mAh/g at a current density of 50 mA/g in a 25°C environment, and had a capacity retention of 64% after 50 cycles.

In the specification, the term "one embodiment", "some embodiments", "examples", "specific examples", or "some examples", etc. means that a particular feature, structure, material, or characteristic described in connection with the embodiment or example is included in at least one embodiment or example of the present disclosure. In this specification, the above terms are not necessarily directed to the same embodiment or example. Furthermore, the specific features, structures, materials, or characteristics described may be combined in any suitable manner in any one or more embodiments or examples. Furthermore, the various embodiments or examples and features of the various embodiments or examples described in this specification can be combined by those skilled in the art without departing from the scope of the present disclosure.

While the embodiments of the present disclosure have been illustrated and described above, it shall be understood that the above-described embodiments are illustrative, rather than limiting the present disclosure. Those skilled in the art can make changes, modifications, substitutions, and variations to those embodiments without departing from the scope of the present disclosure.

## Claims

1. A method for preparing a positive electrode material, the method comprising:
step 1 of performing a co-precipitation reaction by mixing a soluble manganese salt and a soluble metal M salt with carbonate, to obtain a co-precipitate containing MₓMn₁₋ₓCO₃; and
step 2 of sintering the co-precipitate containing MₓMn₁₋ₓCO₃ in an air atmosphere to obtain the positive electrode material containing MₓMn₁₋ₓO₂, wherein:
M is at least one selected from Al, Zr, Ti, Ni, Co, Mg, Ta, Ca, Fe, Na, K, Cu, Zn, Nb, Sn, Sb, La and In; and
x is in a range from 0 to 1 excluding endpoints 0 and 1.

2. The method according to claim 1, wherein in the step 1, the soluble manganese salt is at least one selected from manganese sulfate, manganese nitrate, manganese acetate, and manganese chloride.

3. The method according to claim 1 or 2, wherein in the step 1, the soluble metal M salt is at least one of M sulfate, M nitrate, M acetate, M oxalate, and M chloride.

4. The method according to any one of claims 1 to 3, wherein in the step 1, a total molar concentration of the soluble manganese salt and a total molar concentration of the soluble M salt ranges from 0.001 mol/L to 10 mol/L.

5. The method according to any one of claims 1 to 4, wherein in the step 1, a molar concentration of the carbonate ranges from 0.001 mol/L to 10 mol/L.

6. The method according to any one of claims 1 to 5, wherein in the step 2, said sintering is performed at a temperature from 150°C to 700°C.

7. The method according to any one of claims 1 to 6, wherein in the step 2, said sintering is performed at a temperature 320°C to 470°C.

8. The method according to any one of claims 1 to 7, wherein in the step 2, a duration of said sintering ranges from 0.1 hour to 20 hours.

9. The method according to any one of claims 1 to 8, wherein in the step 2, a duration of said sintering ranges from 2 hours to 8 hours.

10. The method according to any one of claims 1 to 9, wherein the co-precipitate containing MₓMn₁₋ₓCO₃ is washed and dried prior to said sintering the co-precipitate containing MₓMn₁₋ₓCO₃ in the air atmosphere.

11. A positive electrode material, being prepared by the method according to any one of claims 1 to 10.

12. A positive electrode plate, being prepared by using the positive electrode material obtained by the method according to any one of claims 1 to 10 or the positive electrode material according to claim 11.

13. An aqueous zinc ion battery, comprising the positive electrode plate according to claim 12.
